# EUROPEAN PATENT APPLICATION

(11) **EP 3 454 439 A1**
(43) Date of publication of application: **13.03.2019**
(21) Application number: 17190681.1
(22) Date of filing: 12.09.2017
(51) Int. Cl.: H02G 1/06, H02G 9/04, H02G 9/06, H02G 9/02

(54) **METHOD FOR LAYING POWER CABLES**

(71) Applicant: Heidelberger Beton GmbH, 69120 Heidelberg (DE)
(72) Inventor: LOTHMANN, Ingo-Rüdiger, 52224 Stolberg (DE)
(74) Representative: Zellentin & Partner mbB Patentanwälte

(57) **Abstract**

The present invention relates to a method of laying power cables (1) below ground comprising the steps: digging a trench (10), lining ground and walls of the trench (10) with a plastic sheet (3), arranging at least one cable (1) inside the trench (10), filling the trench (10) with a pourable embedding material (2), folding the plastic sheet (3) onto the top of the embedding material (2), and sealing edges (4, 5) of the plastic sheet (3) on top of the embedding material (2). The invention also provides an embedding system for laying cables below ground, comprising a pourable embedding material (2) and a plastic sheet (3) for encasing the embedding material (2).

## Description

The present invention relates to a method of laying power cables below ground and to an embedding system for this.

In recent years so called renewable energy became more and more important, while conventional coal fired power plants and nuclear power plants came under criticism. Coal fired plants emit huge amounts of CO₂ that is believed to be responsible for global warming. Besides, coal is a finite resource like oil and natural gas. Nuclear power plants are perceived as dangerous and the question of ultimate storage of used nuclear fuel elements is still unsolved. Thus, generating power from sun light, wind and water power, i.e. from energy sources that will not run out, is favorised.

In Germany big plants for generating wind energy have been erected in the north where conditions for generating power from wind are good. However, the major part of the consumers of power are located in the south. The existing electric line system is not able to transmit the increased amount of current especially on windy days. Therefore, an expansion of the electric line system is necessary. Building new power lines is a big investement and costs are very important. Residents frequently oppose overhead lines, they are indeed not a nice view and also "electro smog" is considered problematic by many. Laying cables below ground is perceived a better solution, but it is more expensive.

When cables shall be layed below ground, the trench should be as small as possible and often more than one cable, typically three, are placed inside one trench. Although placing several cables into one trench is more efficient with respect to installation, it requires more attention to the material used for embedding the cables. Cables generate heat when electricity is conducted through them and this heat has to be dissipated effectively. Otherwise, the distance between the cables would have to be bigger or a given cable can transmit less electricity.

One, maybe the most important, factor for heat dissipation is the thermal conductivity of the used embedding material. Proposals include the use of appropriate mixtures of sand and/or gravel optionally with cement or other binders, see e.g. "Kabel und Leitungen für Starkstrom. Grundlagen und Produkt-Know-How für das Projektieren von Kabelzulagen", ISBN 389578088X, S. 307- 318 and EP 1 903 015 B1, as well as special materials like concrete with a content of graphite and clay, see DE 199 64 341 B4. It has also been proposed to place the cables onto a metal sheet, see DE 198 47 123 A1. All these approaches are not fully satisfactory. The common mixtures still show a too low thermal conductivity, especially when dry due to the heat generated by the cables. The use of graphite containing material is expensive and might in some cases still not provide the desired thermal conductivity.

Therefore, there exists a need to provide improved, specifically cheaper, methods of laying cables.

Surprisingly, it has now been found that this object can be solved by surrounding the embedding material with a plastic sheet.

Thus, the invention provides a method for laying cables below ground, comprising the steps:
digging a trench,
lining the trench with a plastic sheet,
arranging one or more cables in the trench,
filling the trench with a pourable embedding material,
folding the plastic sheet onto the top of the embedding material and sealing the edges.

The invention also provides an embedding system for cables below ground, comprising a pourable embedding material and a plastic sheet for encasing the embedding material.

The method and system according to the invention allow a considerable increase of thermal conductivity, since the embedding material is kept moist regardless of the weather and of heating by the cables. No expensive graphite is needed and a reliable constant thermal conductivity is achieved. If graphite is used, the thermal conductivity can be increased allowing smaller trenches or more electrical current (meaning more heat generated) can be conducted inside the cables.

The digging of the trench and arranging of the cables as well as the filling with pourable embedding material occurs in a manner known as such. Typically, the trench is dug out on a predetermined length (e.g. 10m to 10km) with a width (e.g. 0.5m to 1m) and depth (e.g. 1.5m to 0.75m) as planned. In the prior art one or more, usually three, cables are arranged inside the trench with the determined distance to the ground and walls of the trench (e.g. 20cm to 40cm) and if applicable between the cables (e.g. 10cm to 20cm). This is mostly achieved by placing suitable holders in predetermined distances inside the trench and fixing the cables on them. The trench is then filled up with a pourable embedding material. Useful are for example, but not exclusively, sand, sand and gravel, a lean concrete, mixtures of sand and/or gravel with cement and/or other binders, and a mixture containg sand, graphite, clay and cement. When the trench is filled with embedding material the final surface is installed over it, if applicable after hardening of the embedding material.

According to the invention, the dug out trench is lined with a plastic sheet forming part of the embedding system according to the invention. The material of the plastic sheet has to be adapted in strength and durability to survive at least 10 years, preferably at least 20 years and most preferred at least 30 years underground as well as the placeing inside the trench and the filling with embedding material. To this end, material and thickness are adjusted by one of ordinary skill in the art according to general knowledge. Suitable plastics are for example, but not exclusively, polyolefins, polyvinyl chloride, and polyurethane. It is possible to use laminates with layers from two or more plastics, optionally also containing reinforcement layers such as non-woven or grid or fabric layers.

In one embodiment the problem of electro smog can be addressed by incorporating metallic grids or layers into the plastic sheet, that effectively shield electromagnetic waves generated when current is transmitted inside the cable.

The plastic sheet provided by the system and used according to the invention is provided in sufficient dimensions to line the ground and walls of the trench and to be foldable on top of the embedding material so that it can be sealed. Typically, the sheet will be wide enough to overlap on top of the embedding material. The arrangement of the cables and filling up with embedding material follows in the same way as in the prior art when the trench has been lined with the plastic sheet. After filling with the embedding material, the sheet can be sealed e.g. with an adhesive or preferably by welding the overlapped edges together. Naturally, when the sheet is to be sealed by welding the plastic has to be weldable, in the case of laminates the uppermost and lowest layer have to be weldable to each other. Welding is known as such, common are e.g. hot air welding and ultrasonic welding.

In practice it has proven useful to provide the plastic sheet in rolls having a width adapted to (i.e. a bit wider than) the circumference of the planned embedding material cross section and cutting off a length of sheet that corresponds to the length of the dug out trench or a suitable part of it. Separate parts of sheet are also sealed to each other, meaning that the length of an individual part is appropriately longer than needed to allow sealing it to the next part of sheet.

It is further possible to provide the plastic sheet or a part thereof e.g. the egde in a warning colour (such as yellow, red, orange) or to print a warning stripe onto it e.g. along one edge. It is known to place warning tapes above cables to inform persons opening the ground about the cables lying below, see e.g. EP 0 940 614 A2. This protects against inadvertent damage by future construction operations. Providing the plastic sheet with a warning colour and/or printing advantageously spares a separate step of arranging a warning tape above the cables. Therewith the invention allows an additional saving.

After the egdes of the plastic sheet have been sealed the remaining trench is filled to bring the surface to level with the surrounding surface. This is often done with material previously dug out, but other material like sand, gravel or better quality garden earth can of course also be used depending on demand. Although the embedding material could at least almost fill the trench, it is more usual to pour it only around the cables. On the one hand, costs are typically saved since embedding material is more costly than materials like dug out material, sand, gravel or earth. On the other hand the plastic sheet used according to the invention is better protected by a thicker layer of material above it. If applicable a road or a foot path surface or a lawn is restored (or installed) as final step.

The plastic sheet is also easy to open for maintenance of the cables that might be necessary by cutting with e.g. a knive. After completion of the work, the plastic sheet is sealed again, typically with a strip of plastic sheet adhered or welded over the cut.

The invention will be illustrated further with reference to the attached figures that follow, without restricting the scope to the specific embodiments described. The invention further includes all combinations of described and especially of preferred features that do not exclude each other. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit. If not otherwise specified any amount in % or parts is by weight and in the case of doubt referring to the total weight of the composition/mixture concerned.

The term "substantially free" means that a particular material is not purposefully added to a composition, and is only present in trace amounts or as an impurity. As used herein, unless indicated otherwise, the term "free from" means that a compositin does not comprise a particular material, i.e. the compostion comprises 0 weight percent of such material.

In the figures,
Figure 1 shows a cross section through an electric power line comprising three cables laid below ground,
Figure 2 shows a part of plastic sheet being part of the embedding system according to the invention, and
Figure 3a to 3f illustrate the method according to the invention.

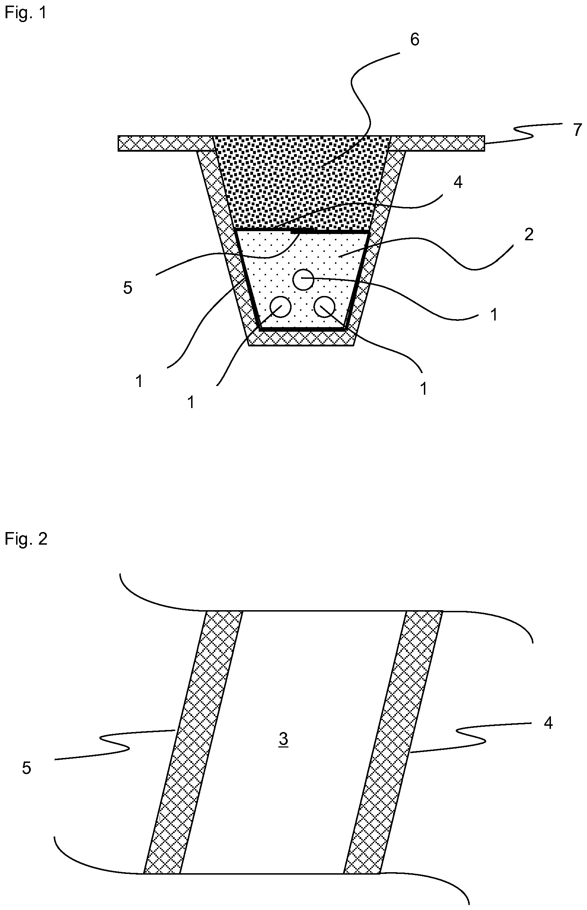

In Figure 1 an exemplary crosssection of three cables 1 laid below ground is shown. The cables 1 are surrounded by embedding material 2 which in turn is encased in a plastic sheet 3. The plastic sheet 3 has overlapping edges 4, 5 at the top which are welded together to seal the sheet 3. The trench is filled in the upper part above the overlapped edges 4, 5 of sheet 3 with material previously dug out. The original ground 7 is indicated with a cross pattern

Figure 2 illustrates a plastic sheet 3 that forms the embedding system according to the invention together with the embedding material. In the example shown both egdes of the sheet are coloured (indicated by hatching). One or both could also be provided with a warning print "Caution power cable" instead or in addition.

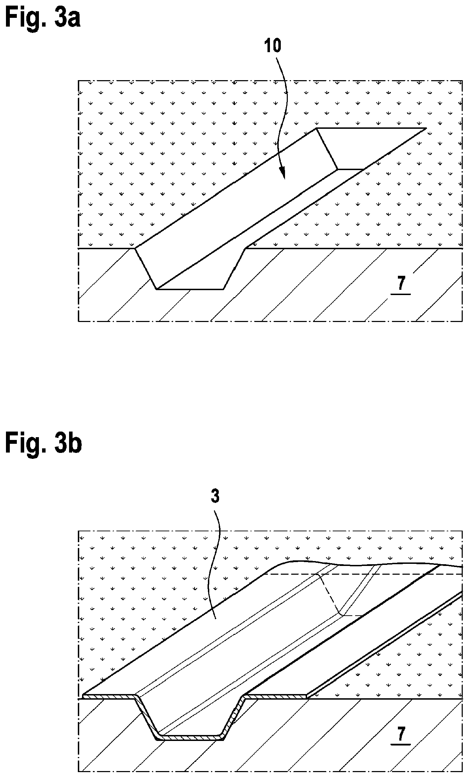

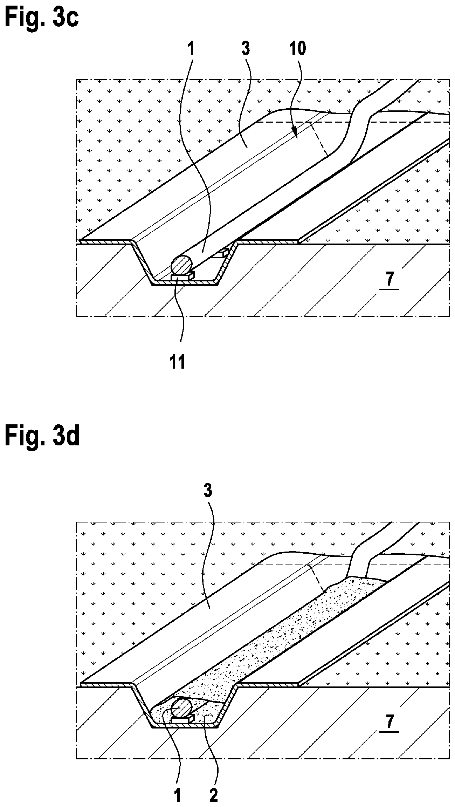

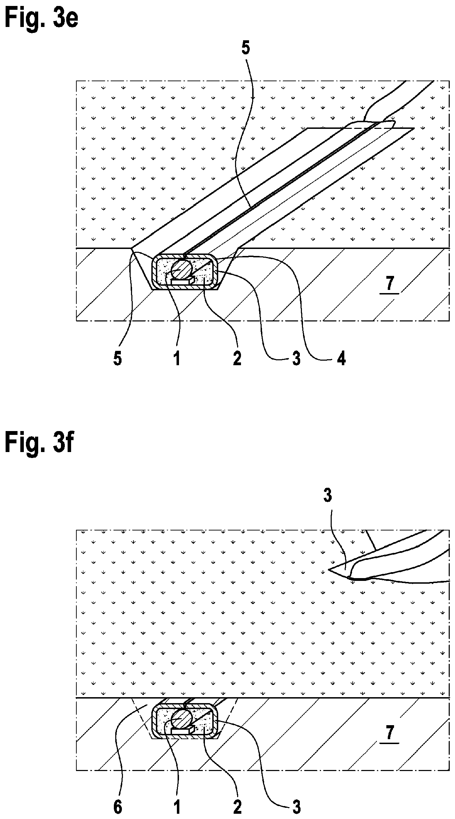

In Figure 3a to 3f different steps of the method according to the invention are visualized. In Figure 3a a trench 10 has been dug out on a predetermined length of e.g. 50 m. In Figure 3b the plastic sheet 3 is laid inside the trench 10 with the edges 4, 5 lying on the ground on both sides of the trench 10. Figure 3c shows a cable 1 placed inside the trench 10 on holder 11. In Figure 3d embedding material 2 is poured into the trench 10 around the cable 1. Figure 3e shows the plastic sheet 3 after the edges 4, 5 have been folded onto the embedding material 2 and the welding has begun. In Figure 3f the surface has been restored above the trench 10. The surface can be a traffic surface like paving or earth that is overgrown in the course of time.

### List of reference numbers

- 1: cable
- 2: embedding material
- 3: plastic sheet
- 4, 5: edges of plastic sheet
- 6: dug out material
- 7: original ground
- 10: trench
- 11: holder

## Claims

1. Method of laying cables below ground, comprising the steps:
- digging a trench (10),
- lining ground and walls of the trench (10) with a plastic sheet (3),
- arranging at least one cable (1) inside the trench (10),
- filling the trench (10) with a pourable embedding material (2),
- folding the plastic sheet (3) onto the top of the embedding material (2), and
- sealing edges (4, 5) of the plastic sheet (3) on top of the embedding material (2).

2. Method according to claim 1, wherein the trench (10) is dug out on a predetermined length with a width and depth as planned, e.g. 0.5 to 1 m width and 1.5 to 0.75 m depth and on a length of 10 m to 10 km.

3. Method according to claim 1 or 2, wherein the cable (1) or cables are arranged inside the trench (10) with a determined distance to the ground and the walls of the trench (10), e.g. 20 to 40 cm, and if applicable between the cables (1), e.g. 10 to 20 cm.

4. Method according to anyone of claims 1 to 3, wherein the embedding material (2) is chosen from sand, sand and gravel, lean concrete, a mixture of sand and/or gravel with cement and/or other binders, and a mixture containg sand, graphite, clay and cement.

5. Method according to anyone of claims 1 to 4, wherein the edges (4, 5) are sealed with an adhesive or by welding the overlapped edges (4, 5) together, e.g. by hot air welding or ultrasonic welding.

6. Embedding system for laying cables below ground, comprising a pourable embedding material (2) and a plastic sheet (3) for encasing the embedding material (2).

7. Embedding system according to claim 6, wherein the embedding material (2) is chosen from sand, sand and gravel, lean concrete, a mixture of sand and/or gravel with cement and/or other binders, and a mixture containg sand, graphite, clay and cement.

8. Embedding system according to claim 6 or 7, wherein a plastic of the plastic sheet (3) is chosen from polyolefins, polyvinyl chloride, and polyurethane.

9. Embedding system according to anyone of claims 6 to 8, wherein the plastic sheet (3) is a laminate comprising two or more layers from plastic and optionally containing a reinforcement layer such as a non-woven or grid or fabric layer.

10. Embedding system according to anyone of claims 6 to 9, wherein the plastic sheet (3) comprises a metallic grid or a metal layer shielding electromagnetic waves generated when current is transmitted inside the cable (1).

11. Embedding system according to anyone of claims 6 to 10, wherein the plastic sheet (3) dimensions are selected so that the sheet lines the ground and walls of the trench (19) and is foldable on top of the embedding material (2), preferably with an overlap.

12. Embedding system according to anyone of claims 6 to 11, wherein the plastic sheet (3) comprises an adhesive strip at one edge (4, 5) for sealing.

13. Embedding system according to anyone of claims 6 to 11, wherein the plastic sheet (3) is weldable.

14. Embedding system according to anyone of claims 6 to 13, wherein the plastic sheet (3) or an area along one or both egde(s) (4, 5) thereof has a warning colour and/or a warning stripe is printed along one edge or both edges (4, 5).
